(19) Europäisches Patentamt
European Patent Office
Office européen des brevets

(11) **EP 4 315 054 B1**

(12) **EUROPEAN PATENT SPECIFICATION**

(45) Date of publication and mention
of the grant of the patent:
**08.10.2025  Bulletin 2025/41**

(21) Application number: **21716110.8**

(22) Date of filing: **25.03.2021**

(51) International Patent Classification (IPC):
***G06F 9/50*** *(2006.01)*

(52) Cooperative Patent Classification (CPC):
**G06F 9/5088; G06F 9/5033;** G06F 2209/5018

(86) International application number:
**PCT/EP2021/057841**

(87) International publication number:
**WO 2022/199823 (29.09.2022 Gazette 2022/39)**

(54) **TASK SCHEDULING**

AUFGABENPLANUNG

PLANIFICATION DE TÂCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024  Bulletin 2024/06**

(73) Proprietor: **Telefonaktiebolaget LM Ericsson
(publ)
164 83 Stockholm (SE)**

(72) Inventors:
• **ÅBERG, Patrik
247 32 SÖDRA SANDBY (SE)**
• **WIKENFALK, Bengt
252 84 HELSINGBORG (SE)**

(74) Representative: **Ericsson
Patent Development
Torshamnsgatan 21-23
164 80 Stockholm (SE)**

(56) References cited:
**US-B2- 10 877 808**

• **XIAOYA XIANG ET AL: "Cache Conscious Task
Regrouping on Multicore Processors",
CLUSTER, CLOUD AND GRID COMPUTING
(CCGRID), 2012 12TH IEEE/ACM
INTERNATIONAL SYMPOSIUM ON, IEEE, 13 May
2012 (2012-05-13), pages 603 - 611, XP032186579,
ISBN: 978-1-4673-1395-7, DOI: 10.1109/
CCGRID.2012.139**

**Description**

**TECHNICAL FIELD**

Embodiments presented herein relate to a method, a controller, a computer program, and a computer program product for scheduling a task from a plurality of tasks to a processor core of a cluster of processor cores, where the processor cores share caches.

**BACKGROUND**

In general terms, a thread of execution, i.e. a task, can be defined as the smallest sequence of programmed instructions that can be managed independently by a scheduler, which is typically a part of the operating system. The implementation of threads and processes differs between operating systems, but in most cases a thread is a component of a process. Multiple threads can exist within one process, executing concurrently and sharing resources such as memory, while different processes do not share these resources. In particular, the threads of a process share its executable code and the values of its variables at any given time. Systems with a single processor generally implement multithreading by time slicing: the central processing unit (CPU) switches between different software threads. This context switching generally happens very often and rapidly enough that users perceive the threads or tasks as running in parallel. On a multiprocessor or multi-core system, i.e., a system using a cluster of processor cores, multiple threads can execute in parallel, with every processor or core executing a separate thread simultaneously; on a processor or core with hardware threads, separate software threads can also be executed concurrently by separate hardware threads.

There exist different mechanisms for scheduling tasks to the cores. For example, depending on the core, cluster and system capacity, the scheduler could select an idle core, an idle cluster or adds more jobs to an already active cluster. It could also be possible to have static definitions on where to deploy a thread (i.e. to which core a task should be scheduled to).

The threads may or may not share parts of the (cacheable memory) working-set and the threads may or may not introduce cache aliasing effects in certain combinations. Only having static definitions on where to deploy a thread can be made to take this situation into account. Scheduling based on static definitions provides the possibility to make optimal placement of the tasks to the cores, but could require big effort in careful studies of the working-set behavior for the individual threads in order to analyze the shared working-set usage. Furthermore, the common usage will differ with dynamic effects, impossible to capture with static analysis methods. Another possibility is to use system simulations to capture the required characteristics, but also this requires big efforts in terms of computational resources. This work needs to be repeated for each new software build.

Some prior art systems discloses a method for scheduling a task from a plurality of tasks to a processor core of a cluster of processor cores. The method comprises determining group-wise task relationships between the plurality of tasks based on duration of cache misses resulting from running groups of the plurality of tasks on processor cores sharing the same cache. The method comprises scheduling the task to one of the processor cores based on the group-wise task relationships of the task.

The patent document published as US10877808B2 discloses one such prior art system of scheduling a task; providing mechanisms for scheduling a task from a plurality of tasks to a processor core of a cluster of processor cores. The processor cores share caches. A method is performed by a controller. The method comprises determining group-wise task relationships between the plurality of tasks based on duration of cache misses resulting from running groups of the plurality of tasks on processor cores sharing the same cache. The method comprises scheduling the task to one of the processor cores based on the group-wise task relationships of the task.

However, as the inventors have realized - such systems may not provide an optimal scheduling of tasks, and especially not over time.

Hence, there is still a need for an improved scheduling of tasks for a cluster of processor cores.

**SUMMARY**

As discussed above, contemporary techniques for scheduling of tasks between caches and processor clusters still needs to be improved. The inventors have realized that even if a scheduling may appear to be optimal before the scheduling has been done, it may not actually be so.

The teachings herein address this problem and provide a manner for a dynamic scheduling that ensures that cache cluster populations are efficient also after the system has been running in a dynamic manner for a time.

An object of embodiments herein is to provide efficient scheduling of tasks for a cluster of processor cores sharing caches.

According to a first aspect there is presented a method for scheduling a first task for a cache of a cluster of processor cores executing one or more tasks, the method being performed by a controller, the method comprising: determining task relationships for the one or more tasks being executed; determining ranking for at least one combination of tasks based on the one or more tasks being executed, taking into account the first task to be scheduled; selecting a best ranked combination out of the at least one combination of tasks; and scheduling the first task according to the selected combination, wherein the method is characterized in that the method further includes: determining the ranking for the at least one combination of tasks by further determining a migration cost for at least one task to be migrated to accomplish the at least one combination as per the appended claims.

According to a second aspect there is presented a controller for scheduling a first task for a cache of a cluster of processor cores executing one or more tasks, the controller comprising processing circuitry, the processing circuitry being configured to cause the controller to: determine task relationships for the one or more tasks being executed; determine ranking for at least one combination of tasks based on the one or more tasks being executed, taking into account the first task to be scheduled; select a best ranked combination out of the at least one combination of tasks; and schedule the first task according to the selected combination, wherein the controller is characterized in that the controller further includes processing circuitry being configured to cause the controller to: determine the ranking for the at least one combination of tasks by further determining a migration cost for at least one task to be migrated to accomplish the at least one combination as per the appended claims.

According to a third aspect there is presented a controller for scheduling a first task for a cache of a cluster of processor cores executing one or more tasks, the controller comprising: processing circuitry; and a storage medium (230) storing instructions that, when executed by the processing circuitry, causes the controller to: determine task relationships for the one or more tasks being executed; determine ranking for at least one combination of tasks based on the one or more tasks being executed, taking into account the first task to be scheduled; select a best ranked combination out of the at least one combination of tasks; and schedule the first task according to the selected combination, wherein the controller is characterized in that the storage medium further includes instructions being configured to cause the controller to: determine the ranking for the at least one combination of tasks by further determining a migration cost for at least one task to be migrated to accomplish the at least one combination as per the appended claims.

According to a fourth aspect there is presented a controller for scheduling a first task for a cache of a cluster of processor cores executing one or more tasks, the controller comprising: determine task relationships for the one or more tasks being executed; a determine module configured to determine ranking for at least one combination of tasks based on the one or more tasks being executed, taking into account the first task to be scheduled; a select module configured to select a best ranked combination out of the at least one combination of tasks; and a schedule module configured to schedule the first task according to the selected combination, wherein the controller is characterized in that the controller further includes: a determine module configured to determine the ranking for the at least one combination of tasks by further determining a migration cost for at least one task to be migrated to accomplish the at least one combination as per the appended claims.

According to a fifth aspect there is presented a computer for scheduling a task from a plurality of tasks to a processor core of a cluster of processor cores, the processor cores sharing caches, the computer program comprising computer code which, when run on processing circuitry of a controller, causes the controller to: determine task relationships for the one or more tasks being executed; determine ranking for at least one combination of tasks based on the one or more tasks being executed, taking into account the first task to be scheduled; select a best ranked combination out of the at least one combination of tasks; and schedule the first task according to the selected combination, wherein the controller is characterized in that the computer program further includes computer code being configured to cause the controller to: determine the ranking for the at least one combination of tasks by further determining a migration cost for at least one task to be migrated to accomplish the at least one combination as per the appended claims.

According to a sixth aspect there is presented a computer program product comprising a computer program according to the fifth aspect and a computer readable storage medium on which the computer program is stored. The computer readable storage medium could be a non-transitory computer readable storage medium.

Advantageously this method and this controller enable improved overall performance of the computing system in which the tasks are scheduled.

Advantageously this method and this controller enable improved power consumption of the computing system in which the tasks are scheduled.

Advantageously this method and this controller enable software optimizations aiming at cache performance not to be needed.

It is to be noted that any feature of the first, second, third, fourth, fifth and sixth aspects may be applied to any other aspect, wherever appropriate. Likewise, any advantage of the first aspect may equally apply to the second, third, fourth, fifth and/or sixth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

**BRIEF DESCRIPTION OF THE DRAWINGS**

The inventive concept is now described, by way of example, with reference to the accompanying drawings, in which:

Figs. 1 and 2 are schematic diagram illustrating computing systems according to embodiments;
Fig.3A is a schematic view of threads being associated with caches according to embodiments;
Fig.3B is a schematic view of threads being associated with caches according to embodiments;
Fig. 4 is a flowchart of methods according to embodiments;
Fig. 5 is a schematic diagram illustrating a task execution including penalty for cache misses according to an embodiment;
Fig. 6 is a schematic diagram showing functional units of a controller according to an embodiment;
Fig. 7 is a schematic diagram showing functional modules of a controller according to an embodiment; and
Fig. 8 shows one example of a computer program product comprising computer readable storage medium according to an embodiment.

**DETAILED DESCRIPTION**

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

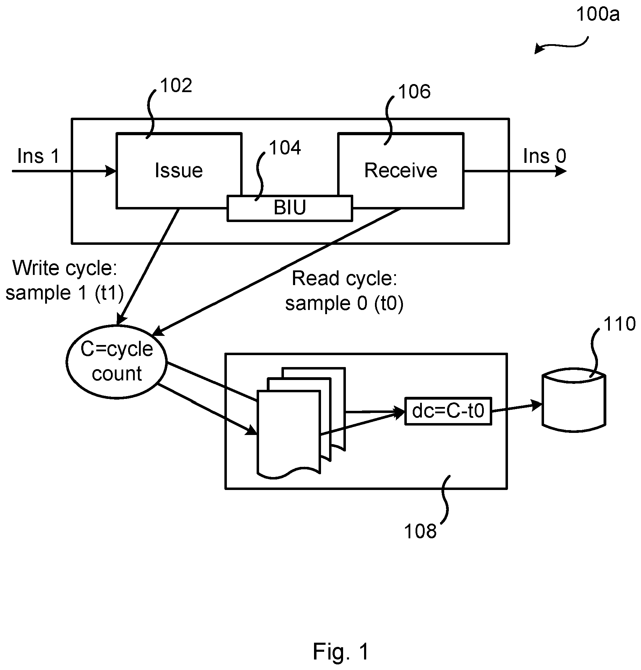

Fig. 1 is a schematic diagram illustrating a computing system 100a according to embodiments. When the processor pipeline is required to access data outside register banks, a current instruction (denoted Ins 0; the notation Ins 1 is used for a next instruction) is processed by a pipeline issue stage 102. The issue stage 102 requests the processor's bus interface unit (BUI) 104 (also referred to as cache port) to fetch requested data and concurrently commands the sample fifo 106 (where fifo is short for first in first out) to register the current cycle count (denoted t0; for the next instruction the corresponding cycle count is denoted t1). At the pipeline receive stage 106, when the pipeline receives data from the BIU, the sample fifo 108 is commanded to sample the current cycle (C) again. This marks the end of the transaction for instruction Ins 0. The sample fifo executes the subtraction dc = C-t0, and requests the penalty time accumulator (PTA) 110 to add the result dc to its current value; its accumulated penalty time. The accumulated penalty time is read by the operating system (OS) scheduler, and stored in the cache penalty statistics that is used to take a scheduling decision.

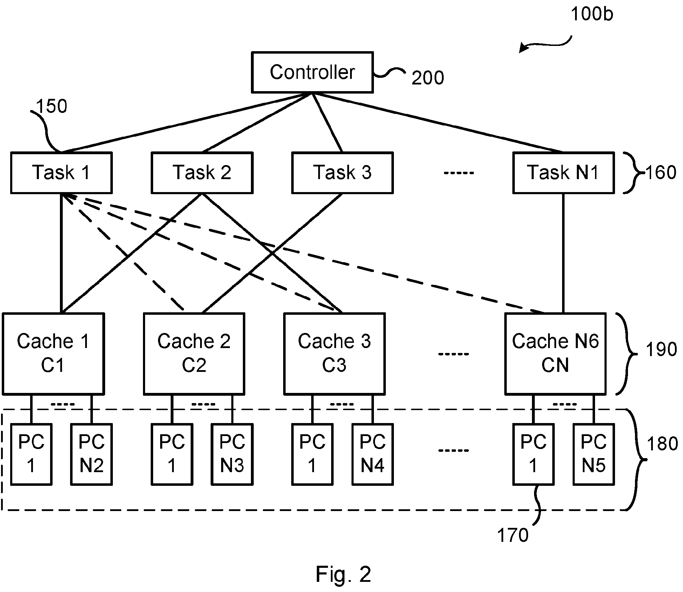

Fig. 2 is a schematic diagram illustrating a computing system 100b according to embodiments. The computing system 100b comprises N6 number of caches 190, where cache 1 C1 is shared by N2 number of processor cores (PC) from a cluster of processor cores 180, where cache 2 C2 is shared by N3 number of processor cores from the cluster of processor cores 180, where cache 3 C3 is shared by N4 number of processor cores from the cluster of processor cores 180, and where cache N6 is shared by N5 number of processor cores from the cluster of processor cores 180. N1 number of different tasks 160 are repeatedly scheduled on the cluster of processor cores 180. In this respect, all numbers N1-N6 could be different. Alternatively, at least two of the numbers N1-N6 are equal. A controller 200 is provided for scheduling a task 150 from the plurality of tasks 160 to at least one processor core 170 of the cluster of processor cores 180. As there may be more than one processor core assigned a task, the description herein will focus on scheduling tasks to the caches C1-CN, irrespective of how many processor cores may be assigned to the task being scheduled.

The embodiments disclosed herein thus relate to mechanisms for scheduling a task 150 from a plurality of tasks 160 to a cache C1-CN 190 belonging to at least one processor core 170 of a cluster of processor cores 180. In order to obtain such mechanisms there is provided a controller 200, a method performed by the controller 200, a computer program product comprising code, for example in the form of a computer program, that when run on a controller 200, causes the controller 200 to perform the method.

The method according to the invention herein is based on determining a task relationship TR between tasks 160 based on how well the tasks perform together in the caches 190. Hence, the controller is configured to determine group-wise task relationships TR between the plurality of tasks 160 based on duration of cache misses resulting from running groups of the plurality of tasks 160 on processor cores 180 sharing the same cache 190. The task relationship for a group XYZ will be denoted TR(XYZ). This means that tasks may be scheduled with respect to the relationship with other tasks. This relationship is determined based on how well the tasks perform together in the caches 190.

In some embodiments the task relationship for a thread X, i.e. TR(X), is determined based on the duration of cache misses (i.e. the time to handle or resolve such cache misses) for the group currently assigned to the respective cache, i.e. the thread X in this denotation. In some such embodiments the task relationship is determined based on the ratio between duration of cache misses and the total execution time for the thread, i.e. $TR(X) = tc(X)/t(X)$, where $tc(X)$ is the time for cache misses for thread X and $t(X)$ is execution time for thread X.

In some embodiments the task relationship for a thread X, i.e. TR(X), is determined based on the number of cache misses for the group of threads currently assigned to the respective cache, i.e. the thread X in this denotation. In some such embodiments the task relationship is determined based on the ratio between number of cache misses and some measure of the total execution for the thread, i.e. $TR(X) = nc(X)/n(X)$, where $nc(X)$ is the number of cache misses for thread X and $n(X)$ is total execution for thread X, possibly the execution time or number of clock cycles or other measurement of execution length.

These alternatives provide a low value for a thread (or threads) executing with only few cache misses.

**In** some embodiments the task relationship is determined as the inverse of any of the alternatives above. This provides a high value for a thread (or threads) executing with only few cache misses.

For a group of tasks, the task relationships may be determined as an average of the task relationship for each task.

For example:

$$TR(XYZ) = (TR(X)+TR(Y)+TR(Z))/3$$

For a group of tasks, the task relationships may alternatively be determined as the sum of the task relationship for each task, prioritizing fewer tasks in each cache.

For example:

$$TR(XYZ) = (TR(X)+TR(Y)+TR(Z))$$

The method is further based on scheduling the task 150 with respect to its task relationship with the other tasks 160. Hence, not only is the task relationship for one thread determined, but for all or at least some of the groups of tasks assigned to the various caches 190.

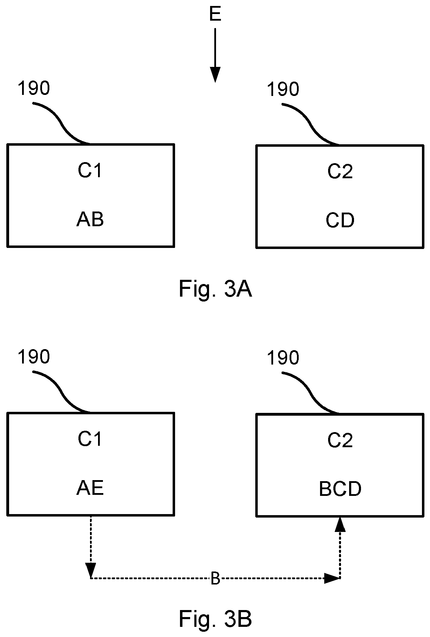

Figure 3A shows a schematic view of two caches 190 C1, C2 assumingly connected to each a cluster of processors for executing any tasks scheduled to the corresponding cache. In figure 3A an example is shown in which four tasks A,B,C,D are scheduled to the two caches, C1, C2, two tasks to each cache. It should be noted that even if two caches are shown each being assigned two tasks each, any number of tasks, and any number of tasks assigned to each cache, as well as any number of caches may be a plausible alternative as a skilled person would realize. For the example of figure 3A, the task relationships are determined for the two groupings AB and CD, that is TR(AB) and TR(CD) are determined. The task values are stored in a matrix or data base storage of task relationships so that data on performance for groups of tasks is gathered and may thus be determined quickly and efficiently even at later scheduling events.

This method also introduces a way to sample data enough to provide (real-time) updated information on which tasks of a plurality of tasks 160 are suited to run together, and also which tasks should avoid executing together in a cache assigned to a cluster of processor cores 180.

As a new task E is to be scheduled, the task relationship for the new task E is determined for possible groupings with the other tasks A,B,C,D. That is, the task relationships TR(ABE) and TR(CDE) are determined. This is so far in line with the prior art systems.

In addition to determining the task relationships for obvious combinations of tasks, the present invention also takes into account the possibility of migrating some tasks to allow for an optimal distribution of scheduled tasks. To determine whether a migration should be effected, the present teachings also include to determine the cost of a migration, where MC(X) denotes the cost for migrating thread X. Alternatively or additionally, MC(XYZ) denotes the cost of migrations necessary to obtain the grouping XYZ. Alternatively or additionally, MC(XYZ) denotes the cost of migrating one of the threads X, Y, Z in the group XYZ. The same cost may be applied regardless of which thread in a specified group that is migrated out of the group.

In some embodiments, the migration cost is determined as the last noted cost for a corresponding migration. In some embodiments, the migration cost is determined as the (floating) average of the last noted costs for a corresponding migration. The number of noted costs included in the average may be set dynamically. The last noted cost may be for any migration, for any thread from the corresponding group or from a specific thread being migrated from that group depending on which definition of migration cost is being used.

The migration cost may be determined as the time for the migration, the number of clock cycles lost due to the migration, or the inverse of such values.

The method according to herein therefore also provides for determining a ranking for a group of threads. The ranking for a group XYZ is denoted R(XYZ). The ranking is based on the task relationship of that group. However, it is not only based on the task relationship of that group, but also on the cost of migrating any thread(s) to achieve that grouping.

The ranking of group XYZ can thus be expressed as

$$R(XYZ)=TR(XYZ)\&\&MC(XYZ),$$

where && denotes some form of combination operator.

In some embodiments the task relationship is investigated along with the migration cost as in being compared to separate values (such as other task relationships and migration costs). In some embodiments the task relationship is investigated as combined with the migration cost as in being compared to same values, such as the sum of task relationships and migration costs, possibly with some weighting.

By enabling migrations, this provides for an opportunity to achieve the optimum scheduling of tasks, especially when taking into consideration the cost of migration. The ranking is therefore determined (possibly such as in being retrieved from the database storage) for all possible combinations, with or without migrations. For the example of figure 3A when task E is to be scheduled the following rankings are determined (not all are shown):

R(-;ABCDE) R(A;BCDE) R(AB;CDE) R(ABC;DE) R(ABCD;E) R(ABCDE;- ) R(B;ACDE) R(BC;ADE) R(BCD;AE) R(BCDE;A) R(C;ABDE) R(AC;BDE) R(ACD;BE) R(ACDE;B) ...
and so on (not all combinations shown). R(A;B) denotes the ranking for A in one cache and B in another cache.

As noted above, the ranking includes the migration cost for establishing a grouping. The ranking for ABC may thus be expressed as:

$$R(ABC) = TR(ABC)\&\&MC(ABC) = TR(ABC)\&\&MC(C)$$

The ranking for the thread grouping AB may be determined as

$$R(AB) = w1 \text{ x } TR(AB) + w2 \text{ x } 1/MC(AB),$$

where w1 and w2 are weights.

In words the ranking for a combination may be determined as the task relationship, possibly weighted, added to the inverse of the migration cost needed to achieve the combination, possibly weighted.

In some embodiments the ranking may be based on which cache is to be assigned, as possibly some caches (with clusters of processor cores) may provide different rankings based on performance criteria (such as cache access speed, cache size, number of processors and/or type of processors). The ranking for threads AB in cache C1 may thus differ from the ranking for threads AB in cache C2, i.e. R(AB, C1) =/=R(AB,C2). In such embodiments, the rankings are also determined based on which cache the thread group is in.

It should be noted that if a value to be determined is missing, such as the task relationship for a grouping or the migration cost for a thread, default values may be used in order to provide some rankings to be compared.

The combination of threads that gives the best ranking (the lowest or the highest depending on what criteria is being used to determine the task relationships and the migration cost) is selected and the task to be scheduled is scheduled accordingly and any migrations that are to be done are also executed. The task relationships before the scheduling and any migrant cost(s) are noted in the database storage for future reference.

For the example of figure 3A, should the ranking R(AE;BCD) provide the best value, indicating the optimum scheduling at this point in time, the thread B is migrated to cache C2, and the new thread E is scheduled to the cache C1.

In figure 3B showing a schematic view of the two caches C1, C2 of figure 3A after the scheduling has been performed, it can be seen as the new thread E has been scheduled to cache C1 together with thread A while thread B has been migrated to cache C2.

The task relationship(s) of the previous constellation (in this example TR(AB) and TR(CD)) is/are determined and stored for future reference. The migration cost(s) needed (in this example MC(B)) is/are also determined and stored for future reference.

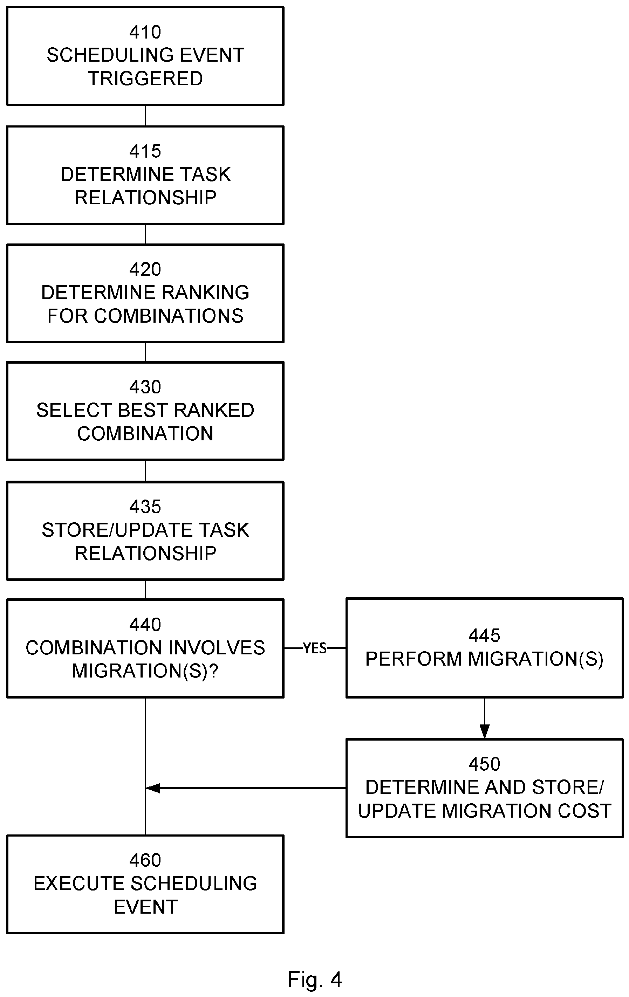

The method as performed by the controller 200 will now be discussed with simultaneous reference to figure 3A, figure 3B and figure 4, where figure 4 is a flowchart showing a general method according to the teachings herein for implementing the invention herein.

As mentioned above, the method is for scheduling a task 150 from a plurality of tasks 160 to a cache C1-CN 190 shared by processor cores 180. The method is performed by the controller 200. The method is advantageously provided as a computer program 720.

The method is initiated as a scheduling event takes place 410. Examples of scheduling events are mainly that a thread is to be scheduled in or out. Examples also include, but are not limited to, migrating a thread, scheduling in one or more threads and migrating one or more threads, and scheduling out one or more threads and migrating one or more threads.

Rankings are determined 420 for a number of thread combinations. The ranking for at least one combination of tasks based on the one or more tasks being executed, taking into account the task to be scheduled (in or out) is thus determined.

In addition to above, the ranking may be based on historical data, and be determined as an average (or sum) of past task relationships for the current grouping, i.e. to reflect how the thread grouping has performed over time.

The ranking for thread group AB may thus be based on accordingly:

$$R(AB)=SUMi=O..m(TRi(AB)),$$

where m denotes how many instances back in time should be included in the sum.

In some such embodiments, the sum may be weighted or filtered, for example through a weighted average.

$$R(AB)=SUMi=O..m(TRi(AB) \times w(i)),$$

where w is a weighing or filter function.

The number of rankings determined is, in some embodiments, one ranking for each possible combination of threads.

In some embodiments the number of combinations is less than all, such as only representing combinations requiring a maximum of 0, 1, 2, ...M migrations, where M denotes the maximum number of migration making sense in a relevant system. The number M may be set dynamically based on historical performance. The number M may depend on the number of allocated threads and/or a maximum number of threads per core.

In some alternative or additional embodiments the number of combinations is less than all, such as only representing combinations resulting in an even distribution of threads to caches. The number of threads per cache may thus be limited (based on the number of available caches and tasks to be executed) so that each cache is loaded in a similar manner. The loading may be in relation to the number of threads. Alternatively or additionally, the loading may be in relation to the size requirements, processing requirements or other requirements of the threads. Additionally or alternatively to the capabilities of the caches (access speed, size for example).

As the determination of rankings is based on determination of task relationships, the method further includes to determine 415 task relationships for all combinations. In some embodiments this includes to determine task relationships for the present groups of threads being executed.

The combination that provides the best ranking is selected 430, where a determination of best depends on how the ranking is determined. For rankings that grow in relation to efficient operation and low migration cost, the combination providing the highest ranking is selected. Vice-versa for rankings that become lower in relation to efficient operation and low migration cost.

As a combination has been selected, the task relationship determined are updated, especially for the group of threads affected by the selected combination, i.e. those groups that are to be changed due to the selected combination. If the task relationships for any grouping of threads were previously unknown they are now determined and stored for future reference. As an alternative, for a previously undetermined task relationship for a currently executing thread group, the task relationship may be determined as part of the determination of ranking as an alternative to using for example default values.

The task relationships may be updated or stored 435, as appropriate.

As a combination may involve one or more migrations, it is determined 440 whether any migration is to be effected. If so, the migrations are performed 445 and the cost for the migration is determined and stored/updated as appropriately 450.

The scheduling event is performed 460.

It should be noted that although a procedure of the method has been outlined herein with reference to figure 4, the method need not be performed in this order, but may be performed in another order. For example the migration may be effected after the scheduling, and or interleaved with the scheduling.

As noted herein the controller is configured to perform the method as outlined herein and with reference to the figures.

Embodiments relating to further details of scheduling a task 150 as performed by the controller 200 will now be disclosed.

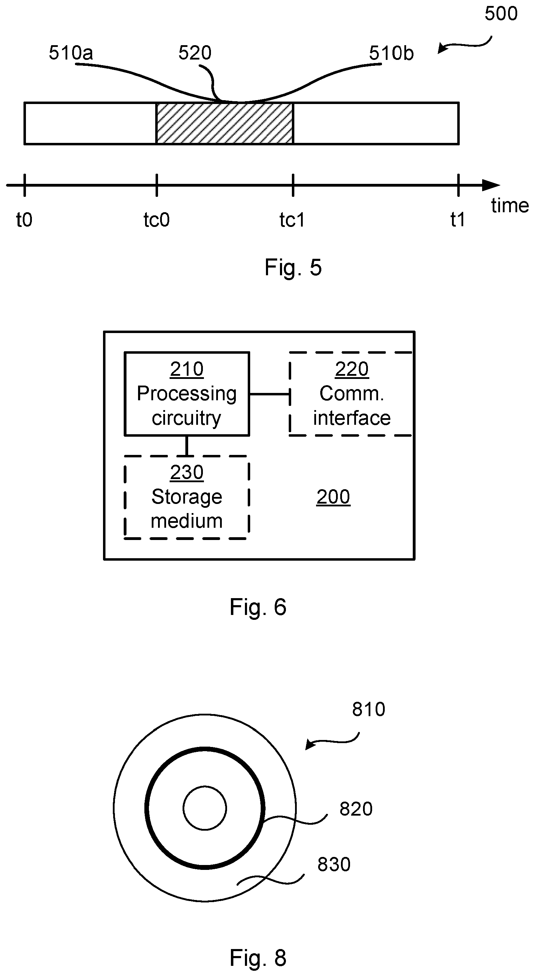

Fig. 5 is a schematic diagram 500 illustrating duration of executing a task 150 in one of the processor cores 180 including the penalty for cache misses, which will be referenced while giving further additional details on how the task relationship TR may be determined for a thread or group of threads. In more detail, execution of the task 150 starts at time and finishes at time t1. That is, the total duration of running the task is t1-t0. This total duration includes the duration of cache misses, symbolically illustrated from time tc0 to time tc1. According to an embodiment each individual task relationship is based on a ratio between the duration tc1-tc0 of cache misses and total duration t1-t0 of running one of the tasks.

According to the illustration in Fig. 5 the time for executing the task not considering cache misses is divided in two chunks 510a, 510b, separated by a chunk 520 corresponding to the penalty for cache misses. However, as the skilled person understands, Fig. 5 is a simple illustration and does not necessarily illustrated practical execution of a task by a processor core; cache misses could occur any time between t0 and t1 and may thus be spread out at a plurality of such chunks 520 between t0 and t1.

Further, the individual task relationship at time index n could depends on the individual task relationship at time index n-1. That is, according to an embodiment the individual task relationship at time index n for running Task A on the processor core sharing cache X depends on the individual task relationship at time index n-1 for running task A on the processor core sharing cache X. In the example of Fig. 2, A takes a value from 1 to N1 and X takes a value from 1 to N6.

In view of the above, the individual task relationship is based on a ratio between the duration tc1-tc0 of cache misses and total duration t1-t0 of running one of the tasks and the individual task relationship at time index n for running Task A on the processor core sharing cache X depends on the individual task relationship at time index n-1 for running task A on the processor core sharing cache X. Hence, according to an embodiment the individual task relationship at time index n for running task A on the processor core sharing cache X has a value TR(A,X)[n] given by:

$$TR(A,X)[n] = ((k-1)\cdot TR(A,X)[n-1] + (tc1-tc0)/(t1-t0))/k,$$

where k>1 is parameter.

There could be different ways to select the value of k. In general terms, the value of k decides the speed with which the tasks will be associated with each other. Typically k could be large enough to out-weight any of the effects of:

- several different tasks having been executed in the same cache as the task sampled at completion,
- functional variations in the completed task from one spawn to another (where a spawn is a function that loads and executes a new child process),
- functional variations in the other tasks running in the same cache from one spawn to another, and/or
- the distribution of run-length for the tasks in the computing system.

As disclosed above, the group-wise task relationship could be based on averaged individual task relationships. Hence, the group-wise task relationship TR(AB... Z,X)[n] at time n for cache X shared by PC 1, PC2, ..., PC Nx for Task A, Task B, ..., Task Z could be determined as

$$TR(X)[n] = (TR(A,X)[n] + TR(B,X)[n] + … + TR(Z,X)[n])/Nx.$$

For example, with reference to the illustrative example of Fig. 2, when a task of type Task 1 has finished it execution in PC 1 of Cache 1, the entries for the relationship between Task 1 and Task 2 (which shares Cache 1 with Task 1) could be updated with a weighted average. Hence, according to an embodiment, group-wise task relationships for all tasks using the same one of the caches are updated every time one of the individual task relationships of this same one of the caches is updated. Then, for the illustrative example of Fig. 2, the lower the number of the individual task relationship at time index n for running Task 1 on processor core PC 1 sharing cache 1 with processor core PC N2 on which Task 2 is run, the more probable that Tasks 1 and Task 2 should share cache also in the future. That is, when Task 1 is run on processor core PC 1 of Cache 1, an individual task relationship for running Task 2 on processor core PC N2 of Cache 1 is also determined. That is, according to an embodiment there are as many individual task relationships per group-wise task relationship as there are processor cores per group-wise task relationship. Further, according to an embodiment there are as many group-wise task relationships as there are caches.

There could be equally or unequally many caches per processor core. According to an embodiment all caches 190 are shared by equally many of the processor cores. Hence, according to this embodiment N2=N3=N4=N5. According to another embodiment the caches 190 are shared by unequally many of the processor cores. Hence, according to this embodiment N2, N3, N4, and N5 take values in a set comprising at least two different numbers such that Ni≠Nj for at least one i, j in the set {2, 3, 4, 5} for i≠j.

There could be different kinds of tasks. According to an embodiment the tasks are run-to-completion tasks. Each one of the tasks could correspond to a software thread. Hence, according to an embodiment the tasks are software threads.

There could be different kinds of clusters of processor cores 180. For example, the cluster of processor cores 180 could be part of a digital signal processor. The cluster of processor cores 180 could be part of one single digital signal processor or of a cluster of digital signal processors. Further in this respect, the controller 200 could be implemented in a control unit of the digital signal processor(s). Additionally or alternatively, the cluster of processor cores 180 is part of a cloud computing system. Hence, according to an embodiment the computing system 100b is a cloud computing system. Further in this respect, the controller 200 could be implemented in a control unit of the cloud computing system.

There could be different kinds of caches 190. For example, the caches may differ in relation to access speed and size. As for the processors, a cache may be remote to a computer, part of a cloud service.

All such alternatives, may affect the task relationship as well as the migration cost for a thread (group).

Fig. 6 schematically illustrates, in terms of a number of functional units, the components of a controller 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 810 (as in Fig. 8), e.g. in the form of a storage medium 230. The processing circuitry 210 may further be provided as at least one application specific integrated circuit (ASIC), or field programmable gate array (FPGA).

Particularly, the processing circuitry 210 is configured to cause the controller 200 to perform a set of operations, such as for implementing or executing the method according to herein, as disclosed above. For example, the storage medium 230 may store the set of operations, and the processing circuitry 210 may be configured to retrieve the set of operations from the storage medium 230 to cause the controller 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The controller 200 may further comprise a communications interface 220 at least configured for communications with entities of the computing system 100b, such as the tasks 160, the cluster of processor cores 180, and the caches 190. As such the communications interface 220 may comprise one or more transmitters and receivers, comprising analogue and digital components. The processing circuitry 210 controls the general operation of the controller 200 e.g. by sending data and control signals to the communications interface 220 and the storage medium 230, by receiving data and reports from the communications interface 220, and by retrieving data and instructions from the storage medium 230. Other components, as well as the related functionality, of the controller 200 are omitted in order not to obscure the concepts presented herein.

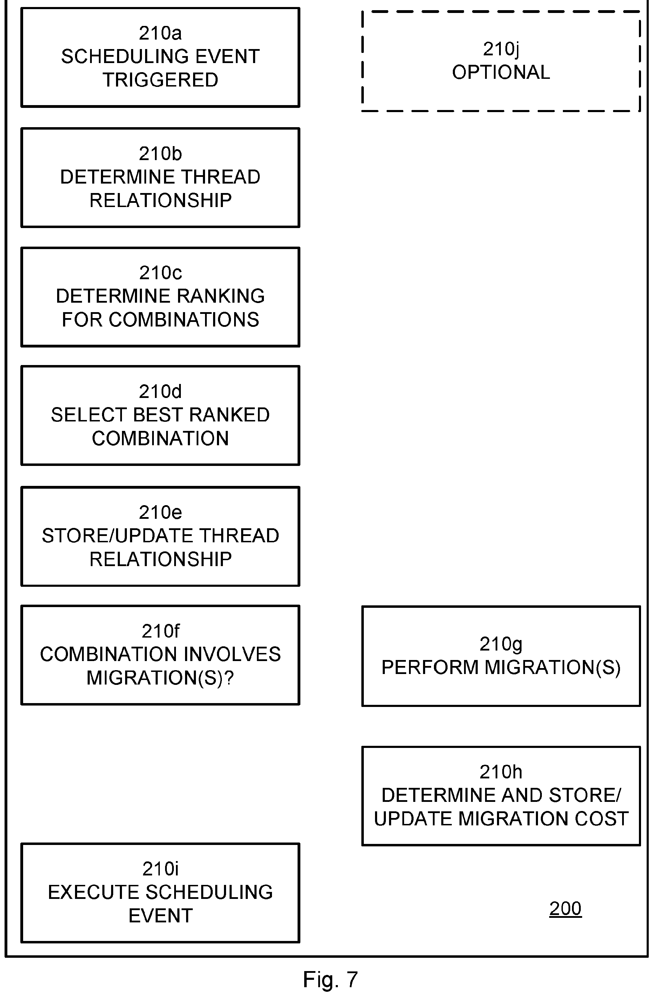

Fig. 7 schematically illustrates, in terms of a number of functional modules, the components of a controller 200 according to an embodiment. The controller 200 of Fig. 7 comprises a number of functional modules. The controller 200 of Fig. 7 comprises a module for triggering a scheduling event 210a, a module for determine a thread relationship to other threads 210b, a module for determine a ranking for thread combinations 210c and a module for selecting the best ranked combination 210d. The controller 200 of Fig. 7 further comprises a module for storing a thread relationship 210e, a module for determining if a combination involves migration(s) 210f, a module for performing any such migration(s) 210f and a module for updating migration costs 210g. The controller 200 of Fig. 7 also comprises a module for executing the scheduling event 210i. The controller 200 of Fig. 7 may further comprise a number of optional functional modules, as symbolized by functional module 210j. In general terms, each functional module 210a-210j may in one embodiment be implemented only in hardware or and in another embodiment with the help of software, i.e., the latter embodiment having computer program instructions stored on the storage medium 230 which when run on the processing circuitry makes the controller 200 perform the corresponding steps mentioned above in conjunction with Fig 7. It should also be mentioned that even though the modules correspond to parts of a computer program, they do not need to be separate modules therein, but the way in which they are implemented in software is dependent on the programming language used. Preferably, one or more or all functional modules 210a-210j may be implemented by the processing circuitry 210, possibly in cooperation with functional units 220 and/or 230. The processing circuitry 210 may thus be configured to from the storage medium 230 fetch instructions as provided by a functional module 210a-210j and to execute these instructions, thereby performing any steps as disclosed herein.

The controller 200 may be provided as a standalone device or as a part of at least one further device. Further, a first portion of the instructions performed by the controller 200 may be executed in a first device, and a second portion of the of the instructions performed by the controller 200 may be executed in a second device; the herein disclosed embodiments are not limited to any particular number of devices on which the instructions performed by the controller 200 may be executed. Hence, the methods according to the herein disclosed embodiments are suitable to be performed by a controller 200 residing in a cloud computational environment. Therefore, although a single processing circuitry 210 is illustrated in Fig. 6 the processing circuitry 210 may be distributed among a plurality of devices, or nodes. The same applies to the functional modules 210a-210c of Fig. 7 and the computer program 720 of Fig. 7 (see below).

Fig. 8 shows one example of a computer program product 810 comprising computer readable storage medium 830. On this computer readable storage medium 830, a computer program 820 can be stored, which computer program 820 can cause the processing circuitry 210 and thereto operatively coupled entities and devices, such as the communications interface 220 and the storage medium 230, to execute methods according to embodiments described herein. The computer program 820 and/or computer program product 810 may thus provide means for performing any steps as herein disclosed.

In the example of Fig. 8, the computer program product 810 is illustrated as an optical disc, such as a CD (compact disc) or a DVD (digital versatile disc) or a Blu-Ray disc. The computer program product 810 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 820 is here schematically shown as a track on the depicted optical disk, the computer program 820 can be stored in any way which is suitable for the computer program product 810.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for scheduling a first task (150) out of a plurality of tasks (160) to a processor core (180) and assign the first task to a cache (190) of the processor core, wherein the processor core is one out of a cluster of processor cores, the cluster of processor cores (180) executing one or more tasks, the method being performed by a controller (200), the method comprising:

   determining (415) task relationships for the one or more tasks being executed, wherein the tasks relationships are based on duration of cache misses resulting from running groups of the plurality of tasks on processor cores (180) sharing the same cache (190);
   determining (420) rankings for combinations of tasks based on the task relationships for the one or more tasks being executed, taking into account the first task to be scheduled;
   selecting (430) a best ranked combination out of the combinations of tasks; and
   scheduling (460) the first task so that the selected combination is achieved, wherein the method is **characterized in that** the
   determination of the rankings for the combinations of tasks further includes determining a migration cost for at least one task to be migrated to accomplish the corresponding combination, and wherein the scheduling includes scheduling the first task and migrating (440) the tasks in the selected combination - if any - when scheduling the first task.

2. The method according to claim 1, wherein the method further includes: storing the determined task relationship.

3. The method according to claim 1, wherein the method further includes: storing the migration cost.

4. The method according to any of the preceding claims, wherein the task relationship for a group of tasks is based on averaged individual task relationships.

5. The method according to any of the preceding claims, wherein the task relationship for a group of tasks is based on task relationships over time.

6. The method according to any of the preceding claims, wherein the task relationship for the first task (150) is based on a ratio between the duration (tc1-tc0) of cache misses and total duration (t1-t0) of running the first task.

7. The method according to any of the preceding claims, wherein the task relationship for the first task (150) is based on the cache to execute the task.

8. The method according to any of the preceding claims, wherein the task relationship for a group of tasks is determined as the sum of the task relationship for each task in the group of tasks.

9. The method according to any of the preceding claims, wherein the at least one combination of tasks is based on a maximum number of migrations allowed (M) wherein the at least one combination of tasks corresponds to all possible combinations of tasks including the first task with a maximum of M migrations.

10. The method according to any of the preceding claims 1 to 8, wherein the at least one combination of tasks corresponds to all possible combinations of tasks including the first task regardless of migration.

11. The method according to any of the preceding claims, wherein the at least one combination of tasks is based on an even distribution of tasks to caches.

12. The method according to claim 11, wherein distribution of tasks to caches is based on the number of tasks divided by the number of caches.

13. The method according to claim 11 or 12, wherein distribution of tasks to caches is based on the size and capabilities of the caches and the requirements of the tasks.

14. The method according to any of the preceding claims, wherein all caches are shared by equally many of the processor cores.

15. The method according to any of claims 1 to 14, wherein the caches are shared by unequally many of the processor cores.

16. The method according to any of the preceding claims, wherein the tasks are software threads.

17. A controller (200) configured to schedule a first task (150) out of a plurality of tasks (160) to a processor core (180) and assign the first task to a cache (190) of the processor core, wherein the processor core is one out of a cluster of processor cores, the cluster of processor cores (180) executing one or more tasks, the controller (200) comprising processing circuitry (210), the processing circuitry being configured to cause the controller (200) to:

   determine (415) task relationships for the one or more tasks being executed, wherein the tasks relationships are based on duration of cache misses resulting from running groups of the plurality of tasks on processor cores (180) sharing the same cache (190);
   determine (420) rankings for combinations of tasks based on the task relationships for the one or more tasks being executed, taking into account the first task to be scheduled;
   select (430) a best ranked combination out of the combinations of tasks; and
   schedule (460) the first task so that the selected combination is achieved, wherein the controller is **characterized in that** the determination of the rankings for the combinations of tasks further includes
   determining a migration cost for at least one task to be migrated to accomplish the corresponding combination, and wherein the scheduling includes scheduling the first task and migrating (440) the tasks in the selected combination - if any - when scheduling the first task.

18. A computer program (820) for scheduling a task (150) out of a plurality of tasks (160) to a processor core (180) and assign the first task to a cache (190) of the processor core, wherein the processor core is one out of a cluster of processor cores, the processor cores sharing caches (190), the computer program comprising computer code which, when run on processing circuitry (210) of a controller (200), causes the controller (200) to:

   determine (415) task relationships for the one or more tasks being executed, wherein the tasks relationships are based on duration of cache misses resulting from running groups of the plurality of tasks on processor cores (180) sharing the same cache (190);
   determine (420) rankings for combinations of tasks based on the task relationships for the one or more tasks being executed, taking into account the first task to be scheduled;
   select (430) a best ranked combination out of the combinations of tasks; and
   schedule (460) the first task so that the selected combination is achieved, wherein the controller is **characterized in that** determination of the rankings for the combinations of tasks further includes determining a migration cost for at least one task to be migrated to accomplish the corresponding combination, and wherein the scheduling includes scheduling the first task and migrating (440) the tasks in the selected combination - if any - when scheduling the first task.

19. A computer program product (810) comprising a computer program (820) according to claim 18, and a computer readable storage medium (830) on which the computer program is stored.

**Patentansprüche**

1. Verfahren zum Planen einer ersten Aufgabe (150) aus einer Vielzahl von Aufgaben (160) in einem Prozessorkern (180) und Zuweisen der ersten Aufgabe an einen Cache (190) des Prozessorkerns, wobei der Prozessorkern einer aus einem Cluster von Prozessorkernen ist, wobei der Cluster von Prozessorkernen (180) eine oder mehrere Aufgaben ausführt, wobei das Verfahren von einer Steuereinheit (200) ausgeführt wird, wobei das Verfahren umfasst:

   Bestimmen (415) von Aufgabenbeziehungen für die eine oder mehreren Aufgaben, die ausgeführt werden, wobei die Aufgabenbeziehungen auf der Dauer von Cache-Fehlern basieren, die sich aus der Ausführung von Gruppen der Vielzahl von Aufgaben auf Prozessorkernen (180) ergeben, die denselben Cache (190) gemeinsam nutzen;
   Bestimmen (420) von Rangfolgen für Kombinationen von Aufgaben basierend auf den Aufgabenbeziehungen für die eine oder mehreren Aufgaben, die ausgeführt werden, unter Berücksichtigung der ersten zu planenden Aufgabe;
   Auswählen (430) einer in der Rangfolge am besten bewerteten Kombination aus den Kombinationen von Aufgaben; und
   Planen (460) der ersten Aufgabe, sodass die ausgewählte Kombination erreicht wird,
   wobei das Verfahren **dadurch gekennzeichnet ist, dass** die Bestimmung der Rangfolgen für die Kombinationen von Aufgaben weiter Bestimmen einer Migrationskosten für mindestens eine zu migrierende Aufgabe beinhaltet, um die entsprechende Kombination zu verwirklichen, und wobei die Planung Planen der ersten Aufgabe und Migrieren (440) der Aufgaben in der ausgewählten Kombination - sofern vorhanden - beim Planen der ersten Aufgabe beinhaltet.

2. Verfahren nach Anspruch 1, wobei das Verfahren weiter beinhaltet:
   Speichern der bestimmten Aufgabenbeziehung.

3. Verfahren nach Anspruch 1, wobei das Verfahren weiter beinhaltet:
   Speichern der Migrationskosten.

4. Verfahren nach einem der vorstehenden Ansprüche, wobei die Aufgabenbeziehung für eine Gruppe von Aufgaben auf gemittelten individuellen Aufgabenbeziehungen basiert.

5. Verfahren nach einem der vorstehenden Ansprüche, wobei die Aufgabenbeziehung für eine Gruppe von Aufgaben auf Aufgabenbeziehungen im Zeitverlauf basiert.

6. Verfahren nach einem der vorstehenden Ansprüche, wobei die Aufgabenbeziehung für die erste Aufgabe (150) auf einem Verhältnis zwischen der Dauer (tc1-tc0) der Cache-Fehler und Gesamtdauer (t1-t0) der Ausführung der ersten Aufgabe basiert.

7. Verfahren nach einem der vorstehenden Ansprüche, wobei die Aufgabenbeziehung für die erste Aufgabe (150) auf dem Cache zur Ausführung der Aufgabe basiert.

8. Verfahren nach einem der vorstehenden Ansprüche, wobei die Aufgabenbeziehung für eine Gruppe von Aufgaben als die Summe der Aufgabenbeziehungen für jede Aufgabe in der Gruppe von Aufgaben bestimmt wird.

9. Verfahren nach einem der vorstehenden Ansprüche, wobei die mindestens eine Kombination von Aufgaben auf einer maximal zulässigen Anzahl von Migrationen (M) basiert, wobei die mindestens eine Kombination von Aufgaben allen möglichen Kombinationen von Aufgaben entspricht, einschließlich der ersten Aufgabe mit maximal M Migrationen.

10. Verfahren nach einem der vorstehenden Ansprüche 1 bis 8, wobei die mindestens eine Kombination von Aufgaben allen möglichen Kombinationen von Aufgaben einschließlich der ersten Aufgabe entspricht, unabhängig von der Migration.

11. Verfahren nach einem der vorstehenden Ansprüche, wobei die mindestens eine Kombination von Aufgaben auf einer gleichmäßigen Verteilung von Aufgaben auf Caches basiert.

12. Verfahren nach Anspruch 11, wobei die Verteilung der Aufgaben auf Caches auf der Anzahl der Aufgaben, geteilt durch die Anzahl der Caches, basiert.

13. Verfahren nach Anspruch 11 oder 12, wobei die Verteilung der Aufgaben auf Caches auf der Größe und Leistungsfähigkeit der Caches und den Anforderungen der Aufgaben basiert.

14. Verfahren nach einem der vorstehenden Ansprüche, wobei alle Caches von gleich vielen der Prozessorkerne gemeinsam genutzt werden.

15. Verfahren nach einem der Ansprüche 1 bis 14, wobei die Caches von ungleich vielen der Prozessorkerne gemeinsam genutzt werden.

16. Verfahren nach einem der vorstehenden Ansprüche, wobei die Aufgaben Software-Threads sind.

17. Steuereinheit (200), die dazu konfiguriert ist, eine erste Aufgabe (150) aus einer Vielzahl von Aufgaben (160) in einem Prozessorkern (180) zu planen und die erste Aufgabe an einen Cache (190) des Prozessorkerns zuzuweisen, wobei der Prozessorkern einer aus einem Cluster von Prozessorkernen ist, wobei der Cluster von Prozessorkernen (180) eine oder mehrere Aufgaben ausführt, wobei die Steuereinheit (200) eine Verarbeitungsschaltung (210) umfasst, wobei die Verarbeitungsschaltung dazu konfiguriert ist, die Steuereinheit (200) dazu zu veranlassen:

   Aufgabenbeziehungen für die eine oder die mehreren Aufgaben, die ausgeführt werden, zu bestimmen (415), wobei die Aufgabenbeziehungen auf der Dauer von Cache-Fehlern basieren, die sich aus der Ausführung von Gruppen der Vielzahl von Aufgaben auf Prozessorkernen (180) ergeben, die denselben Cache (190) gemeinsam nutzen;
   Rangfolgen für Kombinationen von Aufgaben basierend auf den Aufgabenbeziehungen für die eine oder mehreren Aufgaben, die ausgeführt werden, unter Berücksichtigung der ersten zu planenden Aufgabe zu bestimmen (420);
   eine in der Rangfolge am besten bewertete Kombination aus den Kombinationen von Aufgaben auszuwählen (430); und
   die erste Aufgabe zu planen (460), sodass die ausgewählte Kombination erreicht wird, wobei die Steuereinheit **dadurch gekennzeichnet ist, dass** die Bestimmung der Rangfolge für die Kombinationen von Aufgaben weiter Bestimmen einer Migrationskosten für mindestens eine zu migrierende Aufgabe beinhaltet, um die entsprechende Kombination zu verwirklichen, und wobei die Planung Planen der ersten Aufgabe und Migrieren (440) der Aufgaben in der ausgewählten Kombination - sofern vorhanden - beim Planen der ersten Aufgabe beinhaltet.

18. Computerprogramm (820) zum Planen einer Aufgabe (150) aus einer Vielzahl von Aufgaben (160) in einem Prozessorkern (180) und Zuweisen der ersten Aufgabe an einen Cache (190) des Prozessorkerns, wobei der Prozessorkern einer aus einem Cluster von Prozessorkernen ist, wobei die Prozessorkerne Caches (190) gemeinsam nutzen, wobei das Computerprogramm Computercode umfasst, der, wenn er auf einer Verarbeitungsschaltung (210) einer Steuereinheit (200) läuft, die Steuereinheit (200) dazu veranlasst:

   Aufgabenbeziehungen für die eine oder die mehreren Aufgaben, die ausgeführt werden, zu bestimmen (415), wobei die Aufgabenbeziehungen auf der Dauer von Cache-Fehlern basieren, die sich aus der Ausführung von Gruppen der Vielzahl von Aufgaben auf Prozessorkernen (180) ergeben, die denselben Cache (190) gemeinsam nutzen;
   Rangfolgen für Kombinationen von Aufgaben basierend auf den Aufgabenbeziehungen für die eine oder mehreren Aufgaben, die ausgeführt werden, unter Berücksichtigung der ersten zu planenden Aufgabe zu bestimmen (420);
   eine in der Rangfolge am besten bewertete Kombination aus den Kombinationen von Aufgaben auszuwählen (430); und
   die erste Aufgabe zu planen (460), sodass die ausgewählte Kombination erreicht wird, wobei die Steuereinheit **dadurch gekennzeichnet ist, dass** Bestimmung der Rangfolgen für die Kombinationen von Aufgaben weiter Bestimmen einer Migrationskosten für mindestens eine zu migrierende Aufgabe beinhaltet, um die entsprechende Kombination zu verwirklichen, und wobei die Planung Planen der ersten Aufgabe und Migrieren (440) der Aufgaben in der ausgewählten Kombination - sofern vorhanden - beim Planen der ersten Aufgabe beinhaltet.

19. Computerprogrammprodukt (810), das ein Computerprogramm (820) nach Anspruch 18 und ein computerlesbares Speichermedium (830) umfasst, auf dem das Computerprogramm gespeichert ist.

**Revendications**

1. Procédé de planification d'une première tâche (150) parmi une pluralité de tâches (160) vers un cœur de processeur (180) et d'attribution de la première tâche à une mémoire cache (190) du cœur de processeur, dans lequel le cœur de processeur est l'un d'un cluster de cœurs de processeur, le cluster de cœurs de processeur (180) exécutant une ou plusieurs tâches, le procédé étant effectué par un dispositif de commande (200), le procédé comprenant :

la détermination (415) de relations de tâches pour les une ou plusieurs tâches en cours d'exécution, dans lequel les relations de tâches sont basées sur une durée d'échecs de mémoire cache découlant de l'exécution de groupes de la pluralité de tâches sur des cœurs de processeur (180) partageant la même mémoire cache (190) ;
la détermination (420) de classements pour des combinaisons de tâches sur la base des relations de tâches pour les une ou plusieurs tâches en cours d'exécution, en tenant compte de la première tâche à planifier ;
la sélection (430) de la combinaison la mieux classée parmi les combinaisons de tâches ; et
la planification (460) de la première tâche de manière à ce que la combinaison sélectionnée soit réalisée, dans lequel le procédé est **caractérisé en ce que** la détermination des classements pour les combinaisons de tâches inclut en outre la détermination d'un coût de migration pour au moins une tâche à migrer pour accomplir la combinaison correspondante, et dans lequel la planification inclut la planification de la première tâche et la migration (440) des tâches dans la combinaison sélectionnée, le cas échéant, lors de la planification de la première tâche.

2. Procédé selon la revendication 1, dans lequel le procédé inclut en outre :
le stockage de la relation de tâches déterminée.

3. Procédé selon la revendication 1, dans lequel le procédé inclut en outre :
le stockage du coût de migration.

4. Procédé selon l'une quelconque des revendications précédentes, dans lequel la relation de tâches pour un groupe de tâches est basée sur des relations de tâches individuelles moyennes.

5. Procédé selon l'une quelconque des revendications précédentes, dans lequel la relation de tâches pour un groupe de tâches est basée sur des relations de tâches au fil du temps.

6. Procédé selon l'une quelconque des revendications précédentes, dans lequel la relation de tâches pour la première tâche (150) est basée sur un rapport entre la durée (tc1-tc0) des échecs de mémoire cache et la durée totale (t1-t0) d'exécution de la première tâche.

7. Procédé selon l'une quelconque des revendications précédentes, dans lequel la relation de tâches pour la première tâche (150) est basée sur la mémoire cache pour exécuter la tâche.

8. Procédé selon l'une quelconque des revendications précédentes, dans lequel la relation de tâches pour un groupe de tâches est déterminée comme la somme de la relation de tâches pour chaque tâche dans le groupe de tâches.

9. Procédé selon l'une quelconque des revendications précédentes, dans lequel la au moins une combinaison de tâches est basée sur un nombre maximal de migrations autorisées (M), dans lequel la au moins une combinaison de tâches correspond à toutes les combinaisons possibles de tâches incluant la première tâche avec un maximum de M migrations.

10. Procédé selon l'une quelconque des revendications 1 à 8 précédentes, dans lequel la au moins une combinaison de tâches correspond à toutes les combinaisons possibles de tâches incluant la première tâche, indépendamment de la migration.

11. Procédé selon l'une quelconque des revendications précédentes, dans lequel la au moins une combinaison de tâches est basée sur une distribution uniforme de tâches dans des mémoires caches.

12. Procédé selon la revendication 11, dans lequel la distribution de tâches dans des mémoires caches est basée sur le nombre de tâches divisé par le nombre de mémoires caches.

13. Procédé selon la revendication 11 ou 12, dans lequel la distribution de tâches dans des mémoires caches est basée sur la taille et les capacités des mémoires caches et les exigences des tâches.

14. Procédé selon l'une quelconque des revendications précédentes, dans lequel tous les caches sont partagés par le même nombre de cœurs de processeur.

15. Procédé selon l'une quelconque des revendications 1 à 14, dans lequel les mémoires caches sont partagées par un nombre différent de cœurs de processeur.

16. Procédé selon l'une quelconque des revendications précédentes, dans lequel les tâches sont des fils d'exécution logiciels.

17. Dispositif de commande (200) configuré pour planifier une première tâche (150) parmi une pluralité de tâches (160) vers un cœur de processeur (180) et attribuer la première tâche à une mémoire cache (190) du cœur de processeur, dans lequel le cœur de processeur est l'un d'un cluster de cœurs de processeur, le cluster de cœurs de processeur (180) exécutant une ou plusieurs tâches, le dispositif de commande (200) comprenant une circuiterie de traitement (210), la circuiterie de traitement étant configurée pour amener le dispositif de commande (200) à :

déterminer (415) des relations de tâches pour les une ou plusieurs tâches en cours d'exécution, dans lequel les relations de tâches sont basées sur une durée d'échecs de mémoire cache découlant de l'exécution de groupes de la pluralité de tâches sur des cœurs de processeur (180) partageant la même mémoire cache (190) ;
déterminer (420) des classements pour des combinaisons de tâches sur la base des relations de tâches pour les une ou plusieurs tâches en cours d'exécution, en tenant compte de la première tâche à planifier ;
sélectionner (430) la combinaison la mieux classée parmi les combinaisons de tâches ; et
planifier (460) la première tâche de manière à ce que la combinaison sélectionnée soit réalisée, dans lequel le dispositif de commande est **caractérisé en ce que** la détermination des classements pour les combinaisons de tâches inclut en outre
la détermination d'un coût de migration pour au moins une tâche à migrer pour accomplir la combinaison correspondante, et dans lequel la planification inclut la planification de la première tâche et la migration (440) des tâches dans la combinaison sélectionnée, le cas échéant, lors de la planification de la première tâche.

18. Programme informatique (820) pour planifier une tâche (150) parmi une pluralité de tâches (160) vers un cœur de processeur (180) et attribuer la première tâche à une mémoire cache (190) du cœur de processeur, dans lequel le cœur de processeur est l'un d'un cluster de cœurs de processeur, les cœurs de processeur partageant des mémoires caches (190), le programme informatique comprenant un code informatique qui, lorsqu'il est exécuté sur une circuiterie de traitement (210) d'un dispositif de commande (200), amène le dispositif de commande (200) à :

déterminer (415) des relations de tâches pour les une ou plusieurs tâches en cours d'exécution, dans lequel les relations de tâches sont basées sur une durée d'échecs de mémoire cache découlant de l'exécution de groupes de la pluralité de tâches sur des cœurs de processeur (180) partageant la même mémoire cache (190) ;
déterminer (420) des classements pour des combinaisons de tâches sur la base des relations de tâches pour les une ou plusieurs tâches en cours d'exécution, en tenant compte de la première tâche à planifier ;
sélectionner (430) la combinaison la mieux classée parmi les combinaisons de tâches ; et
planifier (460) la première tâche de manière à ce que la combinaison sélectionnée soit réalisée,
dans lequel le dispositif de commande est **caractérisé en ce que** la détermination des classements pour les combinaisons de tâches inclut en outre la détermination d'un coût de migration pour au moins une tâche à migrer pour accomplir la combinaison correspondante, et dans lequel la planification inclut la planification de la première tâche et la migration (440) des tâches dans la combinaison sélectionnée, le cas échéant, lors de la planification de la première tâche.

19. Produit de programme informatique (810) comprenant un programme informatique (820) selon la revendication 18 et un support de stockage lisible par ordinateur (830) sur lequel le programme informatique est stocké.

Fig. 1

Fig. 2

E

190                                    190

C1                                     C2

AB                                     CD

Fig. 3A

190                                    190

C1                                     C2

AE                                     BCD

B

Fig. 3B

```
┌─────────────────────────────┐
│            410              │
│     SCHEDULING EVENT        │
│        TRIGGERED            │
└─────────────────────────────┘
              │
┌─────────────────────────────┐
│            415              │
│      DETERMINE TASK         │
│       RELATIONSHIP          │
└─────────────────────────────┘
              │
┌─────────────────────────────┐
│            420              │
│    DETERMINE RANKING        │
│     FOR COMBINATIONS        │
└─────────────────────────────┘
              │
┌─────────────────────────────┐
│            430              │
│    SELECT BEST RANKED       │
│       COMBINATION           │
└─────────────────────────────┘
              │
┌─────────────────────────────┐
│            435              │
│    STORE/UPDATE TASK        │
│       RELATIONSHIP          │
└─────────────────────────────┘
              │
┌─────────────────────────────┐      ┌─────────────────────────────┐
│            440              │      │            445              │
│   COMBINATION INVOLVES      │─YES─ │    PERFORM MIGRATION(S)     │
│        MIGRATION(S)?        │      │                             │
└─────────────────────────────┘      └─────────────────────────────┘
              │                                    │
              │                      ┌─────────────────────────────┐
              │                      │            450              │
              │◄─────────────────────│   DETERMINE AND STORE/      │
              │                      │   UPDATE MIGRATION COST     │
              │                      └─────────────────────────────┘
┌─────────────────────────────┐
│            460              │
│    EXECUTE SCHEDULING       │
│          EVENT              │
└─────────────────────────────┘
```

Fig. 4

210a
SCHEDULING EVENT
TRIGGERED

210j
OPTIONAL

210b
DETERMINE THREAD
RELATIONSHIP

210c
DETERMINE RANKING
FOR COMBINATIONS

210d
SELECT BEST RANKED
COMBINATION

210e
STORE/UPDATE THREAD
RELATIONSHIP

210f
COMBINATION INVOLVES
MIGRATION(S)?

210g
PERFORM MIGRATION(S)

210h
DETERMINE AND STORE/
UPDATE MIGRATION COST

210i
EXECUTE SCHEDULING
EVENT

200

Fig. 7

500

510a          520                    510b

t0        tc0            tc1              t1        time

Fig. 5

210
Processing
circuitry

220
Comm.
interface

230
Storage
medium

200

Fig. 6

810

820

830

Fig. 8

**EP 4 315 054 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10877808 B2